# EUROPEAN PATENT SPECIFICATION

(11) **EP 0 645 580 B1**
(45) Date of publication and mention of the grant of the patent: **07.01.1998**
(21) Application number: 94830461.3
(22) Date of filing: 28.09.1994
(51) Int. Cl.: F21S 3/14, F21V 8/00

(54) **A system for illuminating tunnels by means of a linear type light source**
Beleuchtungsanordnung für Verkehrstunnel mit langgestreckter Lichtquelle
Dispositif d'éclairage pour tunnels à source lumineuse linéaire

(30) Priority: 28.09.1993 IT RM930656
(43) Date of publication of application: 29.03.1995
(73) Proprietor: E.G.O. HOLDING EUROPE OPTIC GUIDE, L-2015 Luxembourg (LU)
(72) Inventor: Natali, Beniamino, c/o Euro.Si.Ce. Holding s.r.l., I-00198 Roma (IT); Deitinger, Roberto, c/o Euro.Si.Ce. Holding s.r.l., I-00198 Roma (IT); Boukhman, Gennady, c/o Euro.Si.Ce. Holding s.r.l., I-00198 Roma (IT)
(74) Representative: de Simone, Domenico

(56) References cited:
- WO-A-90/04132
- DE-B- 1 124 894
- DE-U- 9 104 502
- PATENT ABSTRACTS OF JAPAN vol. 17, no. 120 (M-1379) 12 March 1993 & JP-A-43 003 506 (KOITO IND. LTD.) 27 October 1992

## Description

This invention relates to a system for illuminating tunnels by means of a linear type light source.

More particularly, this invention concems a system for illuminating tunnels by means of a linear light source, comprising a continuous type illumination path adapted to enable both the pavement of the tunnel and its lining as well as particular marking locations thereof to be contemporaneously illuminated.

As it is well known, the conventional tunnel illumination systems are divided into two types according to the types of lamps used therein.

The systems of a first type use high or low pressure sodium lamps and quinconce arranged fixtures, attached to a steel channel which is overhung from the vault of the tunnel at a level of 5,50 m from the pavement, a distance of about 12 m being provided between two successive lamps.

Due to its construction, this system has the following drawbacks: a noticeable illumination uneveness; a badly delineated planimetric pattern of the tunnel, which is based in this case exclusively upon retroreflectors; a noticeable maintenance difficulty due to the fact that the illumination plant is arranged above the traffic; the creation of very sharp shadows and of an absolutely negative effect caused by the intersection of the light beam and of the vault surface.

The second currently used system provides for employment of illumination fixtures with three band fluorescent lamps having a length of 1,20 m and forming effectively continuous illumination lines.

The fixtures are laterally arranged at a low height level.

When tunnels lined by aluminium sheeting or by valuable concrete panels are involved, the combination is hardly possible and it is not generally possible to correctly illuminate also the lining when the pavement is correctly illuminated.

Furthermore, DE-U-91 04 502.9 discloses an illumination system consisting of a number of successively combined tubular modules comprising a light ray source and light emission duct for propagation of said light rays, wherein said light ray source element has an inwardly mirrored surface and said light ray duct is light transparent.

From the above, it can be realized that all of the presently adopted systems have noticeable disadvantages both from the view point of the possibility to illuminate the vanous portions of the tunnel, and in respect of the complication and manufacturing costs for producing the illumination plant, as well as in respect of the possibility to perform maintenance operations under traffic conditions.

It is, therefore, apparent that the need exists of an illumination system which is adapted to overcome the drawbacks of the already known prior art systems, which is designed in such a way as to enable the pavement of the tunnel, its lining and the traffic control markings to be illuminated by a minimum number of light sources, which enables the maintenance operations to be easily carried out also under particularly heavy traffic conditions without the necessity that the traffic be interrupted for said operations to be carried out, which enables the emitted light to be controlled and addressed, which is easily installed and is adaptable to tunnels of various construction types.

Aiming at overcoming the above mentioned drawbacks, it is proposed, according to this invention, to make an illumination system for highway tunnels which is adapted to illuminate the horizontal pavement of the tunnel and its wall lining by means of a single device consisting of a continuous illumination assembly and which enables the light amount needed to illuminate particular areas, such as signs and signals, which should receive a particular illumination, to be picked up by means of fibre optics or other similar systems.

Aiming at making such a system, it is proposed, according to this invention, to make a continuous illumination assembly comprising a reflecting surface having a very high reflection index, wherein a light ray beam emitted from a lens or projector type optical system propagates, wherein said continuous illumination assembly has one or more output slits for emitting a controlled and addressed light beam, thereby enabling both the tunnel pavement and its wall lining as well as various traffic control markings to be illuminated, wherein said continuous type illumination assembly substantially comprises a modular type construction, wherein each module is individually removable from the plant for maintenance purposes and wherein the system as a whole has fastening means for attachment to the tunnel walls, which make it particularly adaptable to the tunnel geometry and wherein minimum times are required for its installation and for its maintenance.

A further advantage of the illumination system according to this invention is that a sound absorption integrated function is provided in view of the fact that a sound absorbing material is arranged within the modular members forming said linear light source.

It is specific subject-matter of this invention an illumination system for tunnels comprising a light ray source, an emission reflecting duct for propagation of said light rays, characterized in that said emission reflecting duct for propagation of light rays comprises a set of mutually coupled modular units, in that each of said modular units comprises two lateral support brackets, a first optical assembly having at least one slit for emitting light rays; first tubular means for attachment to a tunnel wall; tubular means for aligning said support brackets; covering means having at least a transparent portion corresponding to said light ray emitting slit, a second longitudinally extending optical assembly attached to said support brackets; fastening means for said second reflecting longitudinally extending optical assembly; resilient holding means for said lateral support brackets and said covering means.

According to this invention, said support brackets have a substantially tubular shape defined by an external surface and by an internal surface, wherein a number of recesses divided by wall elements, designed so as to receive said reflecting longitudinally extending optical assemblies as well as sound absorbing members are provided between said external and internal surfaces at their end sections.

A further advantage of this invention is achieved in that when said first reflecting optical assembly has two or more longitudinal slits for emitting lights rays, it enables different areas of the tunnel to be contemporaneously illuminated and correspondingly said slits are made watertight by means of said transparent coverage of the slits themselves.

According to this invention, said first reflecting optical assembly is made of a sheet of a material capable to reflect 90% of incident light, said sheet being shaped, calandered and punched so as to be restrained between two successive brackets.

Furthermore, an additional advantage of this invention is achieved in that said covering element is made of aluminium and is precoated by a polyester paint.

A further particular feature of this invention is that said resilient sealing means, the function of which is to act both as sealing members and as resilient joints, thereby enabling the structure of the light duct to fit the tunnel curvature, are made of self-extinguishing neoprene, 65 Shore hardness, moulded to a predetermined length in a single casting operation, in order to achieve sealing performances higher than or equal to the limits established by the rules in force.

According to a preferred embodiment of this invention, a projector is operatively combined with an optical recovery device.

This invention will be now described by way of illustration rather than by way of limitation by referring to the enclosed drawings, wherein:
Figure 1 shows a schematic view of an illumination plant according to this invention, mounted on the lateral walls of a tunnel;
Figure 2 shows a schematic view of an illumination plant both mounted on the lateral walls and overhanging from the vault of same;
Figure 3 is a perspective view of two modules of the illumination system of Figures 1 and 2 in assembled and covered condition;
Figure 4 is a perspective view of two support brackets included in the illumination system according to the invention, in order to make reflecting modules;
Figure 5 is a cross-sectional view of a support bracket;
Figure 6 is a plan view of the covering layer for the modular elements of Figure 3;
Figures 7a, 7b and 8 show detailed cross-sectional, plan and assembled views of the sealing band and resilient joint.

The illumination system for highway tunnels according to this invention comprises a continuous light source of linear type, consisting of a number of modules within which the light emitted by a projector is subjected to successive reflections.

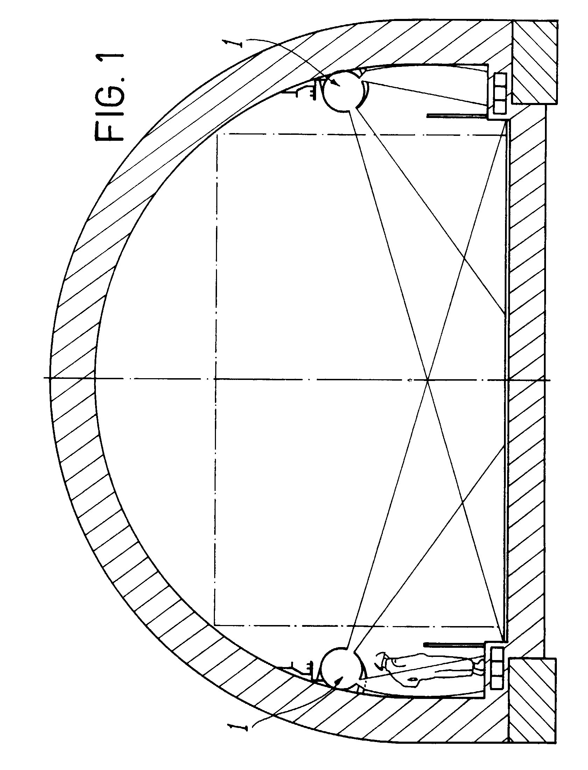

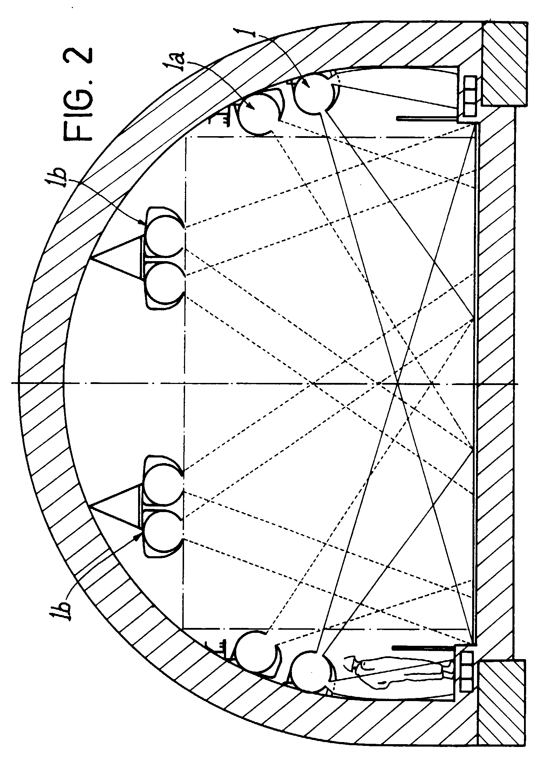

Figures 1 and 2 schematically show two arrangements of a modular light source of linear type, which is broadly defined as a light duct 1 for reflecting and emitting light.

As it can be observed in Figure 1, the light ducts 1 are mounted on the lateral surfaces of the tunnel.

Each module forming part of said light ducts 1, as it will be more particularly described hereinafter, has two slits for controlled emission of light rays which, as clearly shown in Figure 1, illuminate both the horizontal pavement of the tunnel and its lateral surfaces.

In the schematic view of Figure 2, two sets of lateral light ducts 1, 1a are used to increase the illumination level of the entrance section of the tunnel. The second light duct is mounted above the first one and it has one only slit. To the same effect, two sets of light ducts 1b, each having one slit, are overhung from the vault of the tunnel.

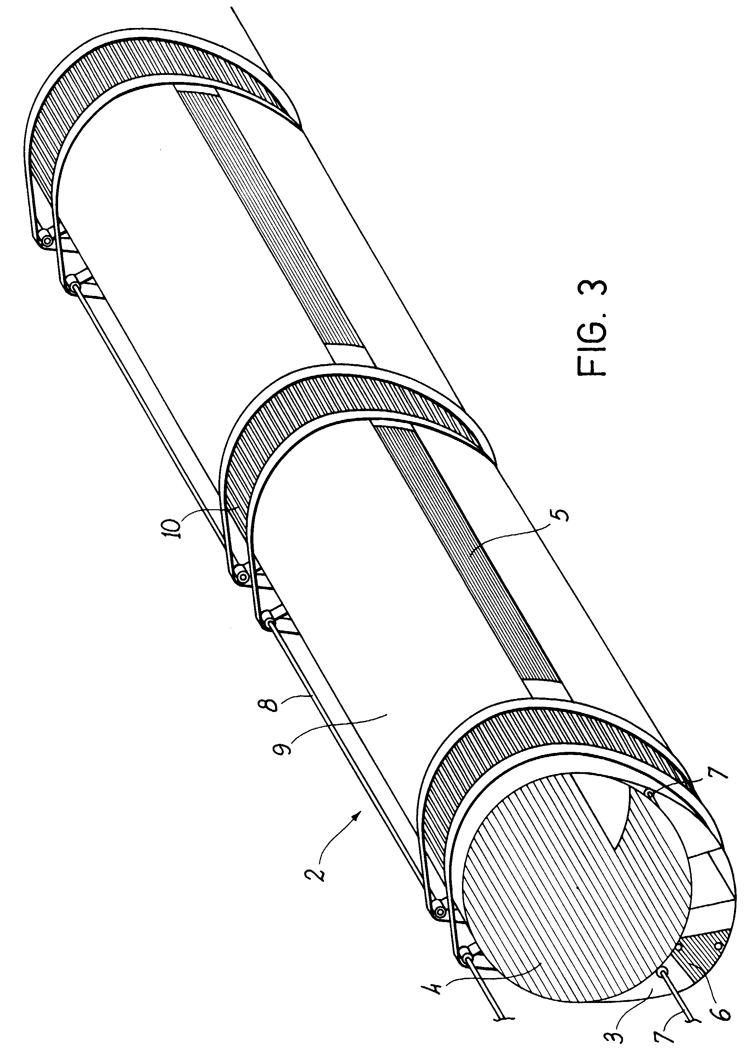

As it can be observed in Figure 3, light duct 1 comprises a set of mutually assembled modular elements 2, within which a light beam propagates, generated by a projector not shown in said Figure.

Each modular element 2 substantially comprises two support brackets 3 for supporting a reflecting optical arrangement 4 consisting of a layer of a suitably shaped reflecting material, which is fastened to said brackets and has a first slit 5 for light emission. Said modular element 2 also supports a further optical arrangement 6 designed for suitably addressing the light beam to the walls of the tunnel. Tubular elements 7 for alignment of the brackets, tubular elements 8 for fastening the brackets to the tunnel, outer covering elements 9 and sealing and junction elements 10 are also shown.

All of these members are shown in their assembled condition and the assembly is completed by covering element 9 in Figure 3.

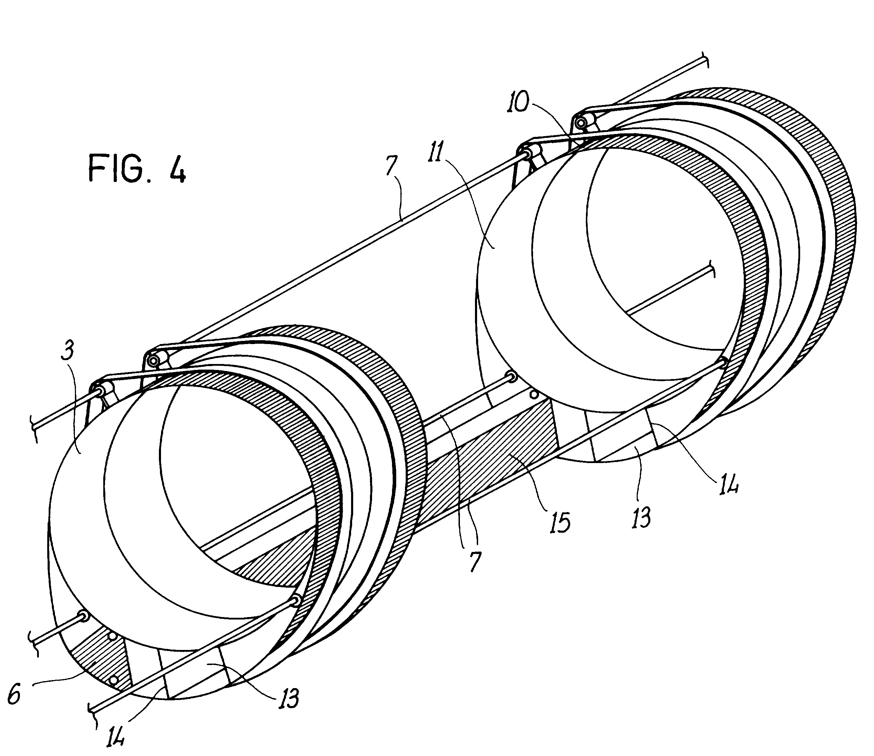

Figure 4 schematically shows a module 2 associated to two adjacent modules, which are illustrated without their external covering 9 and without reflecting optical assembly 4.

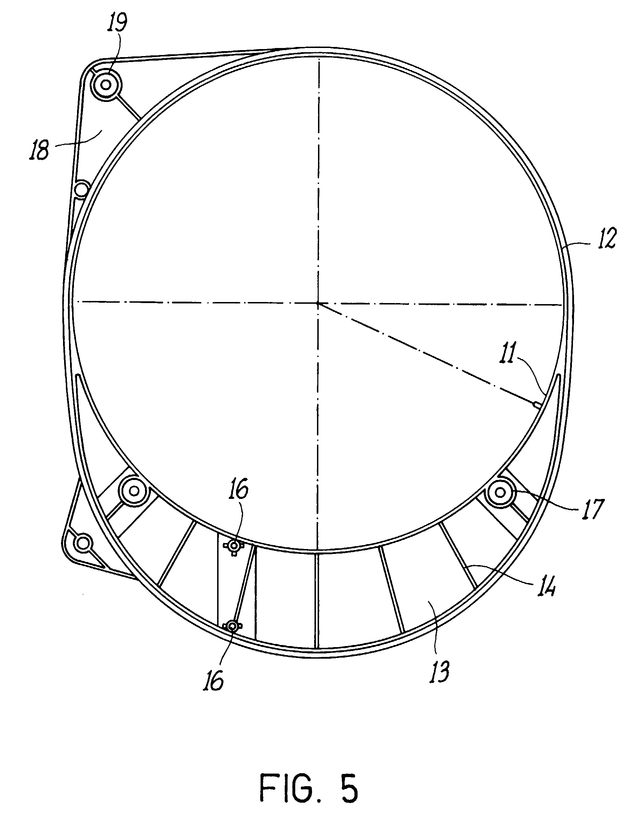

As it can be more easily observed in Figure 5, each bracket 3 comprises an internal surface 11 and an external surface 12. Said internal surface 11 will be in contact with the reflecting surface which forms the above said reflecting optical assembly 4, provided with a slit 5, by which the light beam is reflected.

A set of recesses 13, separated from one another by means of suitable walls 14, are provided in the lower portion of bracket 2 between the internal surface 11 and the external surface 12 and said longitudinal optical assembly 6, aimed at addressing the light beam toward the tunnel walls as well as sound absorbing materials (not shown) are housed within said recesses. Said optical assemblies are fastened in place by means of insert members 16.

Furthermore, holes 17 for receiving the bracket fastening and clamping tubular members 7 are provided in the inwardly arranged recesses 13, said holes being hidden in use by said covering member 9.

A square portion 18, having a recess 19 for housing a wall fastening tubular member 8, is provided in the upper section of bracket 3.

In correspondence to its extemal surface 12, said bracket 3 is partially overlapped by said external covering 9 and both members are fastened in place by means of a ring shaped gasket 10 of a self-extinguishing type neoprene, the function of which is to make the overlapping junction between bracket 3 and covering 9 watertight.

In addition, a reinforcement member is provided in the upper section of the bracket shape in order to engage therein fastening brackets which may be useful for fastening electric cables and to hang cable holding bridges therefrom.

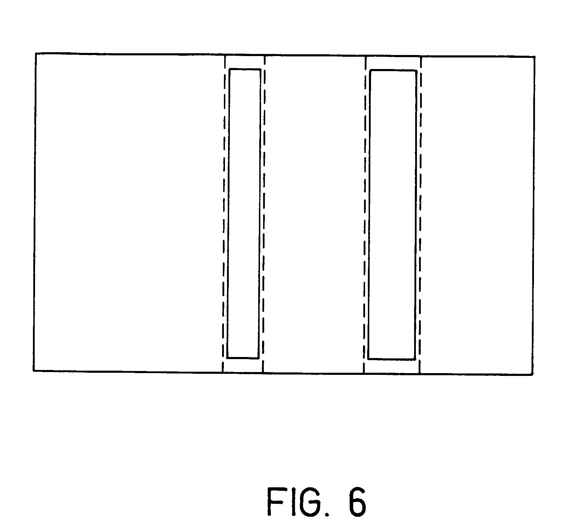

Figure 6 shows a plan view of said covering element 9 having a first and a second optically transparent inserts in correspondence to said optical assemblies.

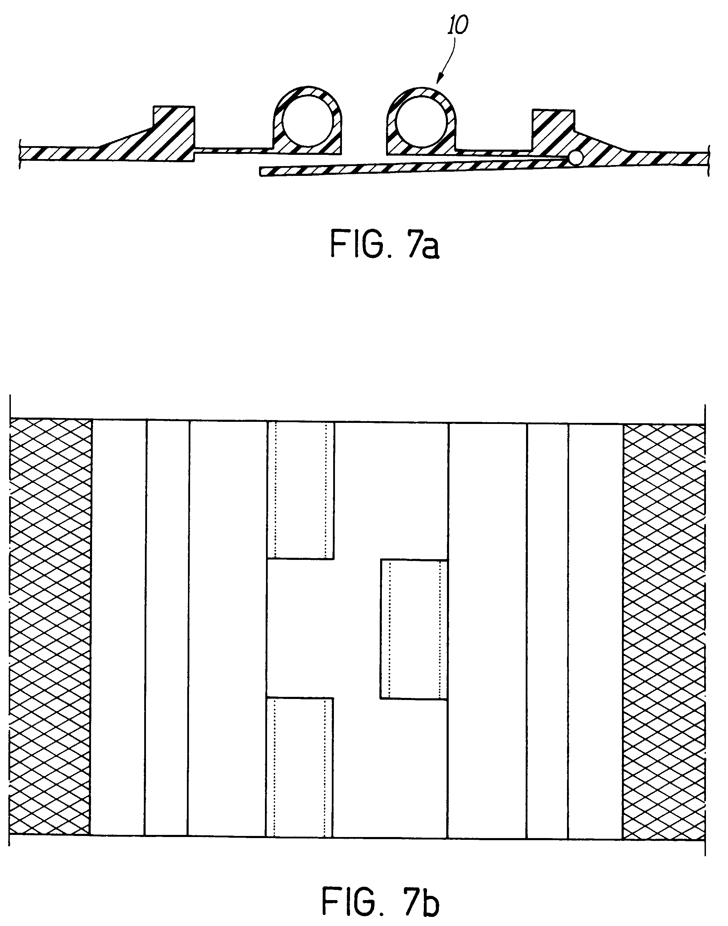

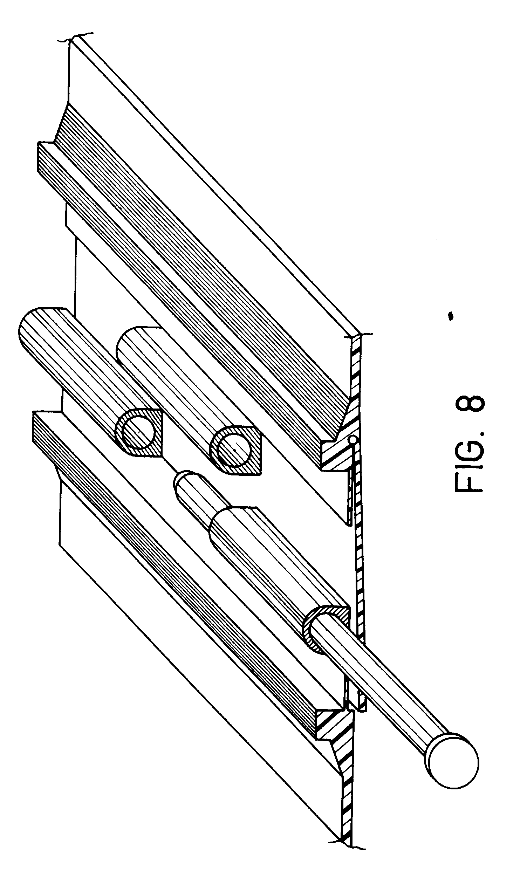

Figures 7a, 7b and 8 illustrate the details of a gasket band 10, acting both as a gasket member and as a resilient joint, in order to enable the light duct 1 to fit the tunnel path.

In a preferred embodiment of this invention, said gasket member 10 is made of self-extinguishing neoprene, 65 Shore hardness, moulded in a single casting operation, with predetermined length.

The preferred embodiments of this invention have been described and a number of variations have been suggested hereinbefore, but it should expressly be understood that those skilled in the art can make other variations and/or changes, without so departing from the scope thereof.

## Claims

1. An illumination system for tunnels comprising a light ray source and an emission reflecting duct (1, 1a) for propagation of said light rays, characterized in that said emission reflecting duct (1, 1a) for propagation of light rays comprises a set of mutually coupled modular units (2), in that each of said modular units comprises two lateral support brackets (3), a first reflecting optical (4) assembly having at least one slit (5) for emitting light rays; first tubular means (8) for attachment to a tunnel wall; second tubular means (7) for aligning said support brackets (3); third tubular means for coupling and clamping said support brackets; covering means (9) having at least a transparent portion corresponding to said light ray emitting slit (5); a second longitudinally extending optical assembly (6) attached to said support brackets (3); fastening means (16) for said second reflecting, longitudinally extending optical assembly (6); resilient holding means (10) for said lateral support brackets (3) and said covering means (9).

2. An illumination system according to claim 1, characterized in that said support brackets (3) have a substantially tubular shape defined by an external surface (12) and by an internal surface (11), wherein a number of recesses (13) divided by wall elements (14), designed so as to receive said reflecting, longitudinally extending optical assemblies (6) as well as elements of sound absorbing material are provided between said external and internal surfaces at their end sections.

3. An illumination system according to claim 1, characterized in that said first reflecting optical assembly (4) has two longitudinal slits (5) for amission of light rays.

4. An illumination system according to claims 1, 2 and 3, characterized in that said first reflecting optical assembly (4) is made of a sheet of a material capable to reflect 90% of incident light, said sheet being shaped, calandered and punched so as to be restrained between two successive brackets.

5. An illumination system according to claims 1-4, characterized in that said covering means (9) is made of aluminium and is pre-coated with a polyester paint.

6. An illumination system according to claims 1-5, characterized in that resilient sealing means (10) are made of self-extinguishing neoprene, of 65 Shore hardness, and are moulded by a single casting operation.

7. An illumination system according to claim 1, characterized in that said light ray source is a projector shared by a number of said modular elements (2), which number is a function of the diameter of said first reflecting optical assembly (4).

8. An illumination system according to claim 1, characterized in that said projector emits light in a direction which parallel to the traffic running direction.

9. An illumination system according to claims 1, 7 and 8, characterized in that lamps having a light power in the range of 15,000 to 150,000 lumen are used in said projector.

## Patentansprüche

1. Beleuchtunganordnung für Verkehrstunnel mit einer Lichtstrahlquelle und einem Ausstrahlungskanal (1, 1a) zur Ausbreitung des Lichtstrahls. dadurch gekennzeichnet, dass der vorgenannte Ausstrahlungskanal (1, 1a) zur Ausbreitung der Lichtstrahlen aus einer Reihe von aneinandergekuppelten modulartigen teilen besteht (2), dass jeder der genannten modulartigen Teile zwei seitliche Tragbügel (3), eine erste optische Ausstrahlungsanordnung (4) mit mindestens einem Schlitz (5) zur Ausstrahlung der Lichtstrahlen, ein erstes Rohrmittel (8) zur Befestigung an die Tunnelwand; ein zweites Rohrmittel (7) zum Ausrichten der vorgenannten Tragbügel (3), ein drittes Rohrmittel zur Kupplung und Befestigung der vorgenannten Tragbügel ; Deckmittel (9) mit mindestens einem, dem vorgenannten Lichtausstrahlungsschlitz (5) zugeordneten lichtdurchlässigen Teil: eine zweite optische Ausstrahlungsanordnung (6), die an die vorgenannten Tragbügel (3) befestigt ist; Spannmittel (16) für die vorgennante zweite optische Ausstrahlungsanordnung (6); elastiche Haltemittel (10) für die vorgenannte Tragbügel (3) und Deckmittel 9 enthält.

2. Beleuchtunganordnung nach Anspruch 1, dadurch gekennzeichnet, dass die vorgenannten Tragbügel (3) eine wesentlich rohrförmige Ausbildung aufweisen, die durch eine Aussenfläche (12) und eine Innenfläche (11) beschränkt ist, wobei eine Anzahl von, durch Trennwände (14) getrennten Fächern (13) zwischen den vorgenannten Aussen- und Innenflächen an deren Endabschnitten vorgesehen ist, die zur Aufnahme der vorgenannten optischen, sich längsweise erstreckenden Anordnung (6) sowie von Teilen aus einem scahlldämpfenden Stoff dienen.

3. Beleuchtunganordnung nach Anspruch 1, dadurch gekennzeichnet, dass die vorgenannte erste optische Anordnung (4) zwei Längsschlitze (5) zur Ausstrahlung von Lichtstrahlen aufweist.

4. Beleuchtunganordnung nach den Ansprüchen 1, 2 und 3 dadurch gekennzeichnet, dass die vorgenannte erste optische Lichtausstrahlungsanordnung (4) aus einer Folie aus einem 90% der auftreffenden Licht abstrahlenden Werkstoff hergestellt ist, wobei diese Folie geformt, tiefgezogen und gestanzt, so dass sie zwischen zwei aufeinander folgendenden Bügeln festgehalten werden kann.

5. Beleuchtunganordnung nach den Ansprüchen 1 bis 4, dadurch gekennzeichnet, dass das deckmittel (9) aus Aluminium gefertigt ist und mit einer Polyester-Auskleidung vobeschichtet ist.

6. Beleuchtunganordnung nach den Ansprüchen 1 bis 5, dadurch gekennzeichnet, dass die elastischen Dichtungsmittel (10) aus selbstlöschbaren Neopren mit einer Härte von 65 Shore hergestellst und durch ein Einzel-Giessverfahren geformt sind.

7. Beleuchtunganordnung nach Anspruch 1, dadurch gekennzeichnet, dass die vorgenannte Lichtquelle ein Scheinwerfer ist, der durch ein Anzahl der vorgenannten modulartigen teilen (2) unterteilt ist, wobei diese Anzahl vom Durchmesser der vorgenannten ersten optischen Ausstrahlungsanordnung abhängt.

8. Beleuchtunganordnung nach Anspruch 1, dadurch gekennzeichnet, dass der genannte Scheinwerfer die Licht in einer zum Verkehr parallelen Richtung ausstrahlt.

9. Beleuchtunganordnung nach den Ansprüchen 1, 7 und 8, dadurch gekennzeichnet, dass im genannten Scheiwerfer lampen mit einer Lichtstärke von 15.000 bis 150.000 Lumen gebraucht werden.

## Revendications

1. Dispositif d'éclairage pour tunnels, comprenant une source de rayon de lumière et un conduit de réflexion d'émission (1, 1a) pour la propagation desdits rayons de lumière, caractérisé en ce que ledit conduit de réflexion d'émission (1, 1a) pour la propagation des rayons de lumière comprend une série des unités modulaires enclenchées l'une à l'autre (2), en ce que chacune desdites unité modulaires comprend deux brides de support latérales (3), un premier ensemble optique de réflexion (4) ayant au moins une fente (5) pour l'émission des rayons de lumière: premiers moyens tubulaires (8) pour ablocage à une paroi du tunnel; deuxièmes moyens tubulaires (7) pour aligner lesdites brides de support (3); troisième moyens tubulaires pour fixer et bloquer lesdites brides de support; moyens de converture (9) ayant au moins une portion transparante correspondante à la fente d'émission des rayons de lumière (5); un deuxième ensemble optique de réflexion (6) fixé à lesdites brides de support (3); moyens de fixage pour ledit deuxième ensemble optique de réflexion (6), qui s'étendant longitudinalement; moyens de retenue elastiques (10) pour lesdires brides de support latérales (3) et lesdits moyens de couverture (9).

2. Dispositif d'éclairage selon la revendication 1, caractérisé en ce que lesdites brides de support (3) ont une forme sensiblement tubulaire, définie par une surface extérieure (12) et par une surface intérieure (11), dans laquelle un numbre des compartiments (13), separés par des éléments de paroi (14) et ménagés de façon à recevoir lesdits ensembles optiques de réflexion s'étendant lontidudinalement (6), ainsi que des éléments d'un matériel isolant acoustique, est prévu entre lesdites surfaces extérieure in leur sections finales.

3. Dispositif d'éclairage selon la revendication 1, caractérisé en ce que ledit premier ensemble optique de réflexion (4) a deux fentes longitudinales (5) pour l'emission des rayons de lumière.

4. Dispositif d'éclairage selon les reventications 1, 2 et 3 caractérisé en ce que ledite premier ensemble optique de réflection (4) est realisé d'une feuille d'un matérial capable de réfléchir 90% de lumière incidente, ladite feuille étant formér, calandrée et poinçonnée de façon à être emboitée entre les deux brides qui se succedent.

5. Dispositif d'éclairage selon les reventivations 1 à 4, caractérisé en ce que ledit moyen de couverture (9) est réalisé d'aluminium et est pre-revêtu d'une couche de polyester.

6. Dispositif d'éclairage selon les revendications 1 à 5, caractérisé en ce que lesdits moyen élastiques étanches (10) sont réalisé de néoprène à auto-extinction.

7. Dispositif d'éclairage selon la revendication 1, caractérisé en ce que ladite source des rayon de lumière est un projecteur divisé par un nombre desdits éléments modulaires (2), ledit nombre étan une fonction du diamètre dudit premier ensemble optique de réflexion (4).

8. Dispositif d'éclairage selon la revendication 1, caractérisé en ce que ledit projecteur émet la lumière en une direction parallel à la direction du trafic.

9. Dispositif d'éclairage selon la revendication 1, 7 et 8 caractérisé en ce que, des lampes ayant une intensité lumineuse entre 15.000 et 150.000 lumen sont utilisées dans ledit projècteur.
